# EUROPÄISCHE PATENTSCHRIFT

(11) **EP 3 212 544 B1**
(45) Veröffentlichungstag und Bekanntmachung des Hinweises auf die Patenterteilung: **29.08.2018**
(21) Anmeldenummer: 15790509.2
(22) Anmeldetag: 30.10.2015
(51) Int. Cl.: B65G 37/00, B65G 39/06

(54) **TRANSPORTVERFAHREN**
TRANSPORT METHOD
PROCEDE DE TRANSPORT

(30) Priorität: 31.10.2014 DE 102014222295
(43) Veröffentlichungstag der Anmeldung: 06.09.2017
(73) Patentinhaber: Singulus Technologies AG, 82256 Fürstenfeldbruck (DE)
(72) Erfinder: HOCHHOLZER, Klaus, 86316 Friedberg (DE)
(74) Vertreter: Stöckeler, Ferdinand
(86) Internationale Anmeldenummer: PCT/EP2015/075336
(87) Internationale Veröffentlichungsnummer: WO 2016/066838

(56) Entgegenhaltungen:
- EP-A2- 1 935 819
- DE-T2- 60 009 726
- FR-A1- 2 720 535
- JP-A- S62 215 984
- US-A- 4 425 694
- US-A1- 2008 134 910
- US-A1- 2011 155 475

## Beschreibung

Die vorliegende Erfindung bezieht sich auf Verfahren zum Transportieren eines zu transportierenden Guts.

Es ist häufig erforderlich, Transportgut bzw. Prozessgut durch eine Anlage, beispielsweise eine Prozessanlage zu transportieren. Unterschiedliche Transporteinrichtungen sind dabei bekannt. Beispielsweise zeigt die US 4089339 eine Vorrichtung zum Reinigen von Werkstücken, bei der die Werkstücke unter Verwendung eines Riemenantriebs transportiert werden. Eine Transportvorrichtung, die Transportrollen und Niederhalterollen aufweist, um ein plattenförmiges Gut gegen die Transportrollen zu halten, ist aus der US 2003/0194309 A1 bekannt. Die WO 2010/009865 A1 offenbart weitere Transporteinrichtungen, bei denen Niederhaltevorrichtungen vorgesehen sein können, oder bei denen eine Benetzung von oben stattfindet, so dass auf mechanische Niederhalter verzichtet werden kann.

Bei einem Lineartransport von leichten, dünnen, sensiblen Substraten, die hart oder flexibel sein können, mittels Rollen, Riemen, Bändern oder Ketten durch Tauch-, Sprüh-, Flut- oder Trockenprozessabschnitte kann das Substrat durch die entstehenden Prozesskräfte in den einzelnen Abschnitten in seiner Durchlaufposition negativ beeinflusst werden oder kann beschädigt werden. Beispielsweise kann das Substrat verdreht, verschoben oder verknittert (fehlgeleitet) bzw. mechanisch in der Oberfläche beeinflusst, werden. Solche Folgen können aufgrund von Massedruck (flüssig-gasförmig), Turbulenzen (flüssig-gasförmig) und Auftriebs- bzw. Adhäsionseigenschaften auftreten. Ein Niederhalten der leichten, dünnen Substrate auf die Transporteinrichtung ist somit erforderlich. Bestehende Niederhaltetechniken, wie beispielsweise freiaufliegende O-Ring-Rollenhülsen, zeigen, dass entstehende Abriebsspuren der O-Ringe den Substratoberflächen nachteilige Eigenschaften bringen. Weiterhin entstehen durch ein Anlaufen und Abbremsen der Hülsen ruckartige Kräfte an dem Substrat, welche wiederum Position und Eigenschaft des Substrats negativ beeinflussen können.

Eine alternative Möglichkeit besteht darin, ein Niederhalten mittels Schwammrollen zu implementieren. Ein Niederhalten mittels Schwammrollen zeigt jedoch Nachteile durch sich schnell ändernde Materialeigenschaften. Ferner weisen Schwammrollen eine geringe Beständigkeit auf, was im Endeffekt zu erhöhten Kosten bzw. Prozessunsicherheit führt.

Niederhaltesysteme, die einen Prozessfluiddruck verwenden, erzeugen wiederum bei chemischen Prozessen an den Substratoberflächen potentiell eine Musterausbildung der Oberflächen, welche sich negativ auf nachfolgende Prozessschritte in der Weiterverarbeitung des Substrats auswirken können, bzw. dessen Funktion einschränken können. Weiterhin kann das Substrat durch den einseitig erhöhten Mediendruck (flüssig-gasförmig) beschädigt werden.

Aus der DE 10 2005 05 7109 A1 ist ein Verfahren nach dem Oberbegriff der Ansprüche 1 und 2 zum Prozessieren flacher, dünner Substrate im Durchlaufverfahren bekannt, das zur Durchführung nasschemische Prozesse, wie Reinigung, Ätzen, Strippen, Beschichten, bei der Herstellung von Solarzellen eingesetzt werden kann. Bei dem Verfahren wird eine Transporteinrichtung verwendet, die obere und untere Walzen aufweist, zwischen denen die Substrate geführt werden. Sowohl der Substrattransport als auch der Nassprozess erfolgt durch die Walzen, die für das Prozessmedium absorbierend sind.

Die der vorliegenden Erfindung zugrunde liegende Aufgabe besteht darin, ein Konzept zu schaffen, das ein spurtreues mechanisches Halten von Gütern und somit einen schonenden Transport sowie ein schonendes Prozessieren von Gütern ermöglicht.

Diese Aufgabe wird durch ein Verfahren gemäß Anspruch 1 und ein Verfahren gemäß Anspruch 2 gelöst.

Ausführungsbeispiele der Erfindung schaffen Verfahren zum Transportieren eines zu transportierenden Guts unter Verwendung einer Transportvorrichtung, die ausgelegt ist, um ein zu transportierendes Gut entlang eines Transportwegs zu transportieren, und zumindest eine Federrolle aufweist, um das zu transportierende Gut gegen eine Transporteinrichtung zu halten. Die Transportvorrichtung kann eine Antriebseinrichtung aufweisen, die ausgelegt ist, um die zumindest eine Federrolle anzutreiben, um sich synchron zur Bewegung des zu transportierenden Guts zu bewegen. Dadurch kann eine Relativbewegung zwischen zu transportierendem Gut und Federrolle vermieden werden, was ein noch schonenderes Halten (beispielsweise Niederhalten) des Guts ermöglicht. Dies ist insbesondere im Fall von empfindlichen Gütern vorteilhaft. Die Federscheibe kann aktiv (angetrieben) oder passiv (mitlaufend) verbaut werden.

Die Federrolle weist eine Nabe und einen Abrollring auf, der durch eine Mehrzahl von um den Umfang der Nabe verteilten Speichen federnd an der Nabe gelagert ist. Jede der Speichen weist ein erstes Segment, das an der Nabe angebracht ist, ein zweites Segment, das an dem Abrollring angebracht ist; und ein drittes Segment zwischen dem ersten Segment und dem zweiten Segment, das bezüglich der radialen Richtung stärker geneigt ist als das erste und das zweite Segment, auf.

Durch die Verteilung, vorzugsweise gleichmäßige Verteilung, einer Mehrzahl von solchen Speichen um den Umfang der Nabe kann der Abrollring federnd an der Nabe gelagert werden. Dies ermöglicht beispielsweise den Einsatz einer entsprechenden Federrolle bzw. Federscheibe zum schonenden Halten eines zu transportierenden Guts gegen eine Transporteinrichtung. Entsprechende Federrollen ermöglichen eine gleichbleibende Umfangsgeschwindigkeit am Abrollring, unabhängig von der Federverformung der Federscheibe, sowie einen sinuskurvenförmigen sehr konstanten Anpressdruck. Somit kann in einem Transportabschnitt ein möglichst konstanter Anpressdruck auf die Transporteinrichtung ohne Relativkräfte auf das Substrat sichergestellt werden.

Bei Ausführungsbeispielen kann sich das dritte Segment in Umfangsrichtung der Federrolle mit zunehmendem Abstand zu der Nabe von dem ersten Segment zu dem zweiten Segment erstrecken. Bei Ausführungsbeispielen können die dritten Segmente der Speichen eine solche Länge aufweisen, dass die dritten Segmente zumindest jeweils benachbarter Speichen in radialer Richtung überlappen. Bei Ausführungsbeispielen können die dritten Segmente eine solche Länge aufweisen, dass die dritten Segmente von drei jeweils benachbarten Speichen in radialer Richtung überlappen. Das dritte Segment kann einen bogenförmigen Verlauf aufweisen oder kann einen oder mehrere gerade Abschnitte aufweisen. Weist das dritte Segment einen geraden Abschnitt auf, kann zwischen dem geraden Abschnitt des dritten Segments und dem ersten und zweiten Abschnitt jeweils zumindest ein bogenförmiges Segment angeordnet sein. Der gerade Abschnitt des dritten Segments kann relativ zu der radialen Richtung um mehr als 45° oder mehr als 60° geneigt sein. Der gerade Abschnitt des dritten Segments kann zu der radialen Richtung in einem Bereich von 85° bis 90° geneigt sein.

Bei Ausführungsbeispielen kann die Transporteinrichtung eine oder mehrere angetriebene Rollen, ein oder mehrere angetriebene Bänder, eine oder mehrere angetriebene Riemen oder eine oder mehrere angetriebene Ketten aufweisen. Die Transportvorrichtung ist ausgelegt, um ein horizontal ausgerichtetes plattenförmiges Transportgut, beispielsweise einen Halbleiterwafer, zu transportieren. Ein rückseitiger Transport ist ebenfalls möglich. Unter einem rückseitigen Transport ist dabei ein Transport zu verstehen, bei dem die Position von Federscheibe und Transportrolle vertauscht ist. Beispielsweise kann das Transportgut auf den Federrollen, die unter dem Transportgut angeordnet sind, aufliegen, und gegen Transportrollen, die über dem Transportgut angeordnet sind, gehalten werden.

Ausführungsbeispiele schaffen Verfahren zum Transportieren eines Guts, wobei das Gut durch eine Prozessstation, in der das Gut behandelt wird, transportiert wird, wobei die Prozessstation eine Trocknungsstation, eine Tauchstation, eine Sprühstation und/oder eine Flutstation sein kann. Die Erfindung schafft ein Verfahren zum Transportieren eines zu transportierenden Guts, das ein Transportieren eines zu transportierendes Guts entlang eines Transportwegs und ein Halten des zu transportierenden Guts auf einer Transporteinrichtung mittels zumindest einer entsprechenden Federrolle aufweist. Dabei kann die zumindest einer Federrolle angetrieben werden, um sich synchron zu der Bewegung des zu transportierenden Guts zu bewegen. Dadurch ist ein besonders schonender Transport des zu transportierenden Guts möglich.

Ausführungsbeispiele der Erfindung werden nachfolgend Bezug nehmend auf die beiliegenden Zeichnungen näher erläutert. Es zeigen:
- Fig. 1 und 2: eine schematische Draufsicht und eine perspektivische Ansicht eines ersten Ausführungsbeispiels einer Federrolle;
- Fig. 3 und 4: eine Draufsicht und eine perspektivische Ansicht eines zweiten Ausführungsbeispiels einer Federrolle;
- Fig. 5: eine perspektivische Ansicht eines dritten Ausführungsbeispiels einer Federrolle;
- Fig. 6: eine perspektivische Ansicht eines Ausführungsbeispiels einer Transport-vorrichtung;
- Fig. 7: eine schematische Seitenansicht einer Transportvorrichtung, wie sie in Fig. 6 gezeigt ist;
- Fig. 8: eine perspektivische Ansicht einer weiteren Transportvorrichtung;
- Fig. 9: eine schematische Darstellung einer Vorrichtung zum Trocknen eines Substrats;
- Fig. 10: eine schematische Darstellung einer Vorrichtung zum Behandeln eines Guts mit einer Flüssigkeit;
- Fig. 11: eine schematische Darstellung einer Vorrichtung zum einseitigen oder beidseitigen Behandeln eines Substrats mittels eines Sprühprozesses;
- Fig. 12: eine schematische Darstellung zweier Federrollen zur Veranschaulichung eines durch die Federrollen erreichten Effekts.

Ausführungsbeispiele der vorliegenden Erfindung beziehen sich auf Verfahren zum Transportieren und/oder Behandeln eines Guts, wobei das zu transportierende Gut ein Halbleiterwafer, eine Glasplatte oder eine Polymerplatte ist. Beispielsweise können solche Siliziumwafer eine Dicke von weniger als 130-140 µm aufweisen. Unter einem plattenförmigen Körper kann dabei ein Körper verstanden werden, dessen Länge und Breite deutlich größer sind als dessen Dicke, beispielsweise mindestens 100-mal oder 200-mal so groß. Dadurch definieren die Länge und die Breite des plattenförmigen Körpers zwei sich im Wesentlichen parallel gegenüberliegende Hauptoberflächen, die die größten Flächen des plattenförmigen Körpers darstellen, deren Fläche deutlich größer ist als die der Seitenfläche(n), die die Hauptoberflächen verbinden. Die Seitenflächen können hierbei als Kanten bezeichnet werden, während die Hauptoberflächen als Unterseite und Oberseite bezeichnet werden können. Beispiele eines plattenförmigen Prozessguts können plattenförmige Halbleitersubstrate sein, wie sie bei der Herstellung von Solarzellen zum Einsatz kommen. Bei alternativen Ausführungsbeispielen kann das Prozessgut eine Glasplatte oder Polymerplatte sein. Plattenförmiges Prozessgut kann eine beliebige Umfangsform aufweisen, beispielsweise eine quadratische, rechteckige, halbquadratische oder runde Umfangsform.

Ausführungsbeispiele der Erfindung verwenden eine Federrolle bzw. eine Federscheibe, die ein spurtreues mechanisches Halten bzw. Niederhalten von dünnen, berührungsempfindlichen Substraten während eines linearen Transports, beispielsweise durch Tauchabschnitte, Sprühabschnitte, Flutabschnitte oder Trockenprozessabschnitte in Fluid- oder Gasphasenprozessen einer Anlage ermöglicht. Zu diesem Zweck können entsprechende Federrollen als Federrollenniederhalter dienen. Ausführungsbeispiele von Federrollen umfassen eine Nabe und einen steifen, harten Abrollring, der zu der Nabe in radialer Richtung mit einer Federkonstante nachgeben kann. Diese Federkonstante wird durch die Mehrzahl von Speichen geliefert, die um den Umfang der Nabe verteilt sind. Die Speichen können gleichmäßig um den Umfang der Nabe verteilt sein, so dass sich die Federkonstante beim Abrollen der Federrolle möglichst konstant verhält. Um dies zu unterstützen, können die Positionen, an denen die ersten Segmente an der Nabe angeracht sind, von den Positionen, an denen die zweiten Segmente an dem Abrollring angebracht sind, azimutal versetzt sein, d.h. nicht auf einer radialen Linie liegen. Unter einer radialen Richtung wird hierin eine radiale Richtung relativ zum Mittelpunkt der Nabe angesehen.

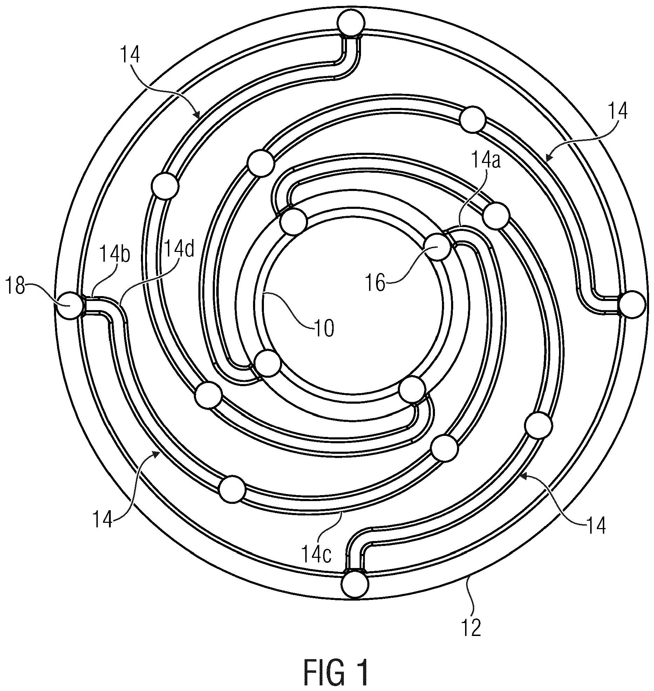

Die Federkonstante der Feder, die durch die Speichen geliefert wird, kann durch die Ausgestaltung der Speichen eingestellt werden. Im allgemeinen kann eine möglichst flache Federkonstante wünschenswert sein, um einen möglichst schonenden Transport eines Guts zu ermöglichen. Ausführungsbeispiele, die eine möglichst flache Federkonstante ermöglichen, werden nachfolgend beispielsweise bezugnehmend auf die Fig. 1 bis 4 erläutert.

Solche Federrollen können verwendet werden, um ein linear gefördertes Substrat auf eine Transporteinrichtung niederzudrücken, bei der es sich beispielsweise um eine Rollenantrieb, einen Bandantrieb, einen Riemenantrieb oder einen Kettenantrieb für das zu transportierende Gut handeln kann. Bei Ausführungsbeispielen können dabei die Transporteinrichtung und die Federrolle derart angeordnet sein, dass das Substrat zwischen denselben leicht geklemmt wird. Somit ist es möglich, ein linear gefördertes Substrat an kritischen Prozessabschnitten von oben mittels synchron zur Substratgeschwindigkeit laufenden Wellen mit Niederhaltefederrollen, die in einem für das Substrat geeigneten Abstand angeordnet sind, niederzudrücken. Das lineare Fördersystem kann dabei jeweils auf der Substratgegenseite den Niederhalterfederrollen ein festes Gegensystem, das beispielsweise durch angetriebene Stützrollen realisiert sein kann, bieten.

Die Federrollen können aus einem geeigneten Material gebildet sein, das derart gewählt ist, dass Prozesse, die bezüglich des Transportguts bzw. Prozessguts durchgeführt werden sollen, keinen oder nur wenig Einfluss auf die Materialeigenschaften haben. Das Material des Abrollrings kann geeignet gewählt werden, um keinen störenden Abrieb auf dem Substrat zu hinterlassen. Die Auswahl geeigneter Materialien ist für Fachleute offensichtlich.

Solche Federrollen ermöglichen somit ein schonendes Niederhalten von zu transportierenden Substraten. Ferner kann ein unrunder Substratlauf, der beispielsweise durch Lauffehler in einem Linearantriebssystem sowie Unebenheiten im Substrat verursacht wird, durch die Federwirkung der Rollen kompensiert werden. Somit kann eine Beschädigung des Substrats reduziert bzw. verhindert werden.

Die Speichen weisen eine längliche Erstreckung auf und die einzelnen Segmente der Speichen weisen ebenfalls eine längliche Form auf. Unter einer länglichen Form wird dabei eine Form verstanden, deren Länge um ein Vielfaches höher ist als eine Höhe und eine Breite bzw. ein Durchmesser. Die Segmente können jeweils gerade oder gebogen sein. Das dritte Segment befindet sich entlang dieser länglichen Erstreckung zwischen dem ersten Segment und dem zweiten Segment. Ein erstes Ende des ersten Segments kann an der Nabe angebracht sein, und ein zweites Ende des ersten Segments kann direkt oder über weitere Verbindungssegmente mit einem ersten Ende des dritten Segments verbunden sein. Ein erstes Ende des zweiten Segments kann mit dem Abrollring verbunden sein, und ein zweites Ende des ersten Segments kann direkt oder über weitere Verbindungssegmente mit einem zweiten Ende des dritten Segments verbunden sein.

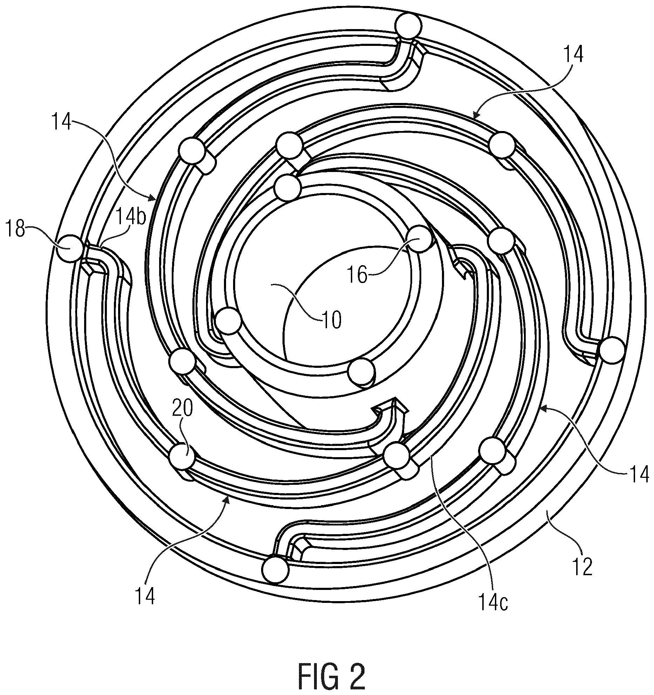

Bezug nehmend auf die Fig. 1 und 2 wird nun ein erstes Ausführungsbeispiel einer Federrolle beschrieben. Die Federrolle weist eine Nabe 10 und einen Abrollring 12 auf. Eine Mehrzahl von Speichen 14, bei dem dargestellten Ausführungsbeispiel vier Speichen 14, verbindet die Nabe 10 mit dem Abrollring 12. Die Speichen 14 weisen einen Verlauf auf, durch den eine federnde Lagerung des Abrollrings 12 an der Nabe 10 geliefert wird. Die Speichen 14 weisen ein erstes Segment 14a, ein zweites Segment 14b und ein drittes Segment 14c auf. Ein erstes Ende der Speiche 14, d.h. des ersten Segments 14a, ist an einem Verbindungspunkt 16 an der Nabe 10 angebracht. Die Verbindungspunkte 16 der Speichen sind vorzugsweise gleichmäßig um den Umfang der Nabe 10 verteilt. Das erste Segment 14a kann sich in radialer Richtung oder mit einer bestimmten Neigung zur radialen Richtung von dem Verbindungspunkt 16 erstrecken. Jede Speiche 14 weist ferner das zweite Segment 14b auf, das an einem Verbindungspunkt 18 mit dem Abrollring 12 verbunden ist. Die Verbindungspunkte 18 der Speichen sind vorzugsweise gleichmäßig um den Umfang des Abrollrings verteilt. Ferner ist ein azimutaler Versatz zwischen den Verbindungspunkten 16, an denen die Speichen 14 an der Nabe 10 angebracht sind, und den Verbindungspunkten 18, an denen die Speichen 14 an dem Abrollring 12 angebracht sind, vorgesehen. Zwischen dem ersten Segment 14a und dem zweiten Segment 14b erstreckt sich ein drittes Segment 14c der Speiche, das bezüglich der radialen Richtung stärker geneigt ist als das erste und das zweite Segment 14a und 14b.

Bei dem gezeigten Ausführungsbeispiel erstreckt sich das dritte Segment 14c bogenförmig zwischen dem ersten Segment 14a und dem zweiten Segment 14b derart, dass in Umfangsrichtung der Federrolle der Abstand des dritten Segments 14c von der Nabe zunimmt. Mit anderen Worten erstreckt sich das dritte Segment 14c spiralförmig zwischen mit zunehmendem Radius zwischen dem ersten Segment 14a und dem zweiten Segment 14b.

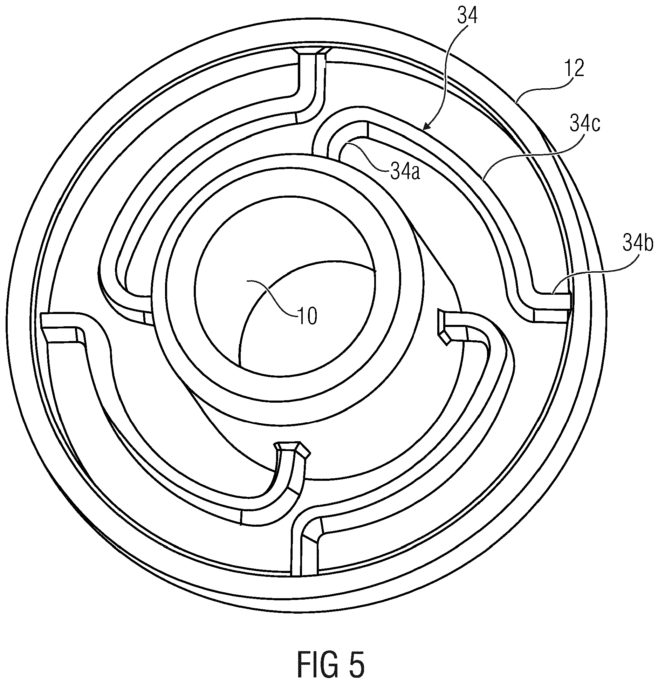

Wie in Fig. 1 gezeigt ist, weisen die bogenförmigen dritten Segmente 14c eine solche Länge auf, dass die bogenförmigen Segmente jeweils benachbarter Speichen einander überlappen. Ferner ist bei dem in Fig. 1 gezeigten Ausführungsbeispiel die Länge der bogenförmigen dritten Segmente 14c so, dass eine Überlappung mit jeweils zwei benachbarten Speichen stattfindet. Bei alternativen Ausführungsbeispielen kann die Länge der bogenförmigen Segmente 14c geringer sein, so dass eine Überlappung mit dem bogenförmigen Segment nur einer benachbarten Speiche stattfindet oder so dass gar keine Überlappung stattfindet, wie beispielsweise in Fig. 5 gezeigt ist.

Wie in Fig. 1 gezeigt ist, kann das erste Segment 14a gekrümmt sein, wobei eine Krümmungsrichtung des ersten Segments 14a einer Krümmungsrichtung des dritten Segments 14c entspricht. Zwischen dem zweiten Segment 14b und dem dritten Segment 14c kann ein weiteres bogenförmiges Segment 14d angeordnet sein, dessen Krümmungsrichtung sich von der Krümmungsrichtung des dritten Segments 14c unterscheidet und dessen Krümmungsradius geringer ist als der Krümmungsradius des dritten Segments 14c. Bei einer alternativen Betrachtungsweise könnte das Segment 14d als Bestandteil des zweiten Segments 14b betrachtet werden.

Im unbelasteten Zustand sind die Nabe 10 und der Abrollring 12 konzentrisch angeordnet. Im belasteten Zustand verschieben sich die Mittelpunkte aufgrund der Federwirkung, die durch die Speichen geliefert wird.

Statt des bogenförmigen Verlaufs könnten die zweiten Segmente bei dem in den Figuren 1 und 2 gezeigten Beispiel auch jeweils eine Mehrzahl von geraden Abschnitten aufweisen, die jeweils eine unterschiedliche Neigung zu der radialen Richtung aufweisen, um einen Verlauf zu erhalten, bei dem sich das dritte Segment in Umfangsrichtung der Federrolle mit zunehmendem Abstand zu der Nabe von dem ersten Segment zu dem zweiten Segment erstreckt. Werden diese geraden Abschnitte infinitesimal klein, würde sich wieder der bogenförmige Verlauf ergeben.

Die in den Fig. 1 und 2 zu erkennenden jeweils senkrecht zur länglichen Erstreckung ausgerichteten zylindrischen Abschnitte, wie z. B. der Abschnitt 20, können herstellungsbedingt auftreten, haben jedoch bezüglich der Funktion keine Relevanz. An dieser Stelle sei ferner angemerkt, dass die Nabe und der Abrollring jeweils entweder auf der Innenoberfläche oder der Außenoberfläche derselben eine Beschichtung aufweisen können, um gewünschte Eigenschaften zu erreichen, wie in den Figuren angedeutet ist. Beispielsweise können die Nabe und/oder der Abrollring auf der Innenseite derselben mit einer Beschichtung versehen sein.

Bei Ausführungsbeispielen der Erfindung können die Nabe, der Abrollring und die Speichen aus einem geeigneten Material hergestellt sein, beispielsweise aus einem Kunststoffmaterial, so dass der Abrollring eine starre äußere Oberfläche bietet und gegenüber der Nabe federnd gelagert ist. Beispielsweise können Ausführungsbeispiele von Federrollen durch Spritzgussverfahren oder dergleichen hergestellt werden.

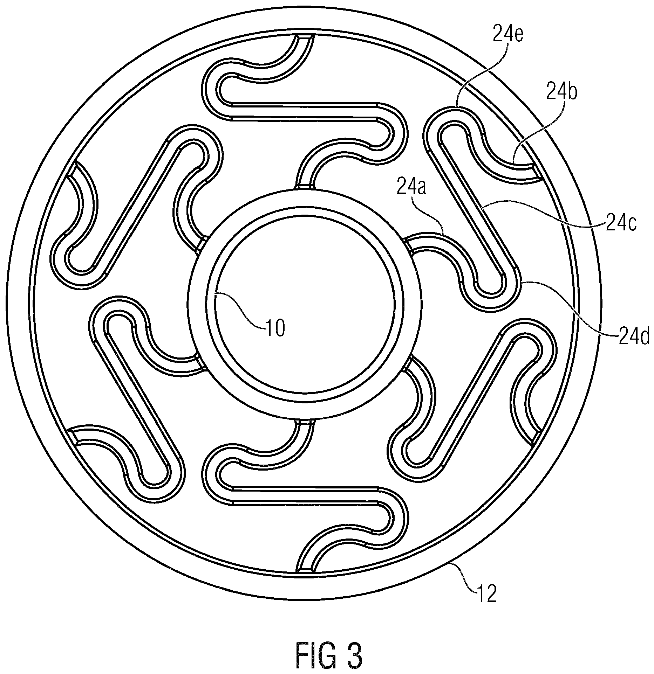

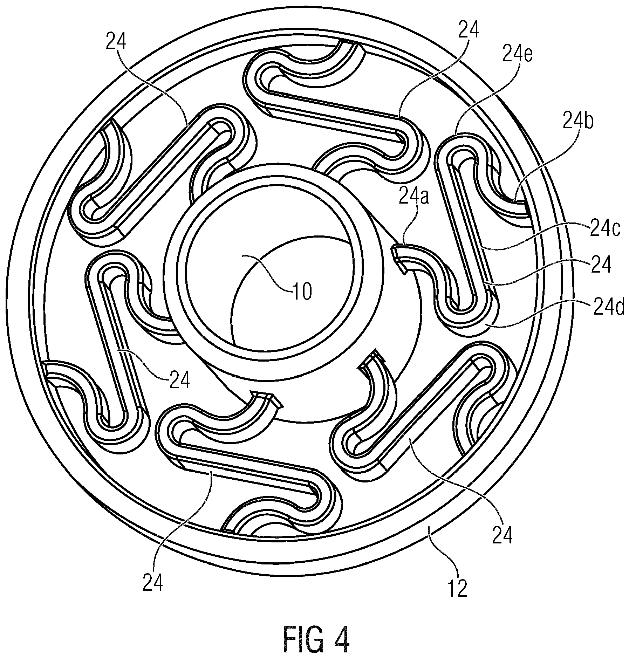

Bezug nehmend auf die Fig. 3 und 4 wird nun ein zweites Ausführungsbeispiel einer Federrolle erläutert, bei dem die zwischen der Nabe 10 und dem Abrollring 12 angeordneten Speichen einen anderen Verlauf aufweisen. Die Federrolle weist sechs Speichen 24 auf, die sich zwischen der Nabe 10 und dem Abrollring 12 erstrecken. Jede Speiche 24 weist ein erstes Segment 24a auf, das an der Nabe 10 angebracht ist, und ein zweites Segment 24b, das an dem Abrollring 12 angebracht ist. Die Position, an der jede Speiche 24 an der Nabe 10 befestigt ist, und die Position, an der jede Speiche 24 an dem Abrollring 12 befestigt ist, liegen bei dem gezeigten Beispiel näherungsweise auf einer radialen Linie. Bei alternativen Beispielen kann ein azimutaler Versatz dieser Positionen vorgesehen sein.

Jede Speiche 24 weist ferner ein drittes Segment 24c auf, das zwischen dem ersten Segment 24a und dem zweiten Segment 24b angeordnet ist. Bei diesem Beispiel weist das dritte Segment 24c einen geraden Abschnitt auf. Der gerade Abschnitt 24c ist in einem Winkel von im Wesentlichen 90° zu der radialen Richtung angeordnet. Bei alternativen Ausführungsbeispielen kann der gerade Abschnitt in einem anderen Winkel, wie z.B. einem Winkel von mehr als 45° oder einem Winkel von mehr als 60°, beispielsweise in einem Winkel von 85° bis 90°, angeordnet sein.

Zwischen dem dritten Segment 24c und dem ersten Segment 24a sind weitere Segmente vorgesehen, ebenso zwischen dem dritten Segment 24c und dem zweiten Segment 24b. Das erste Segment 24a ist bogenförmig und zwischen dem ersten Segment 24a und dem dritten Segment 24b ist ein bogenförmiges viertes Segment 24d vorgesehen, dessen Krümmungsrichtung entgegengesetzt zur Krümmungsrichtung des ersten Segments 24a ist. In gleicher Weise ist zwischen dem dritten Segment 24c und dem zweiten Segment 24b ein bogenförmiges fünftes Segment 24e vorgesehen, dessen Krümmungsrichtung sich von der Krümmungsrichtung des zweiten Segments 24b unterscheidet. Bei dem gezeigten Ausführungsbeispiel ist der Krümmungsradius des vierten Segments 24d kleiner als der des ersten Segments 24a. Bei dem gezeigten Ausführungsbeispiel ist der Krümmungsradius des fünften Segments 24e kleiner als der Krümmungsradius des zweiten Segments 24b. Bei dem gezeigten Ausführungsbeispiel sind die Krümmungsradien des vierten und fünften Segments im Wesentlichen gleich. Bei dem Ausführungsbeispiel sind die Krümmungsradien des ersten Segments 24a und des zweiten Segments 24b im Wesentlichen gleich.

Auch durch den in den Fig. 3 und 4 gezeigten Verlauf der Speichen wird eine federnde Lagerung des Abrollrings 12 gegenüber der Nabe 10 erreicht.

Ein weiteres Ausführungsbeispiel für einen möglichen Verlauf der Speichen ist in Fig. 5 gezeigt. Gemäß Fig. 5 ist der Abrollring 12 über vier Speichen 34 mit der Nabe 10 gekoppelt. Der Verlauf der Speichen 34 ist ähnlich zu dem Verlauf der Speichen, wie er in Fig. 1 gezeigt ist, wobei jede Speiche 34 ein erstes Segment 34a, ein zweites Segment 34b und ein drittes Segment 34c aufweist. Jedoch ist gemäß Fig. 5 die Länge der dritten Segmente 34c der Speichen geringer als bei dem in den Figuren 1 und 2 gezeigten Beispiel, so dass die dritten Segmente 34c jeweils benachbarter Speichen nicht überlappen. Durch die geringere Länge der dritten Segmente 34c kann ein höhere Federkonstante und somit eine größere Federhärte erreicht werden.

Durch die Länge der dritten Segmente kann die Federhärte der Feder, die durch die Speichen gebildet wird, eingestellt werden. Durch die Erhöhung der Länge der dritten Segmente kann die Feder weicher gemacht werden, während durch eine Verringerung der Länge der dritten Segmente eine größere Federhärte erreicht werden kann.

Federrollen, wie sie oben beschrieben sind, können beispielsweise vorteilhaft in einer Transportvorrichtung bzw. Fördervorrichtung verwendet werden. Beispielsweise können solche Federrollen vorteilhaft als Niederhalterollen in einer Transportvorrichtung verwendet werden. Beispielsweise können solche Federrollen in einem Rollentransportsystem Verwendung finden, bei dem ein flexibles Substrat, beispielsweise ein Silizium-Wafer, ein Folien-Wafer oder ein Glas-Wafer mit einer Dicke von weniger als 150 µm, über entsprechende Federrollen auf Transportrollen definiert angedrückt wird, so dass eine Traktion für den Substratvortrieb bei der Prozessierung sichergestellt werden kann. Beispiele für eine solche Prozessierung sind Tauchprozesse, Sprühprozesse, Flutprozesse und Trockenprozesse.

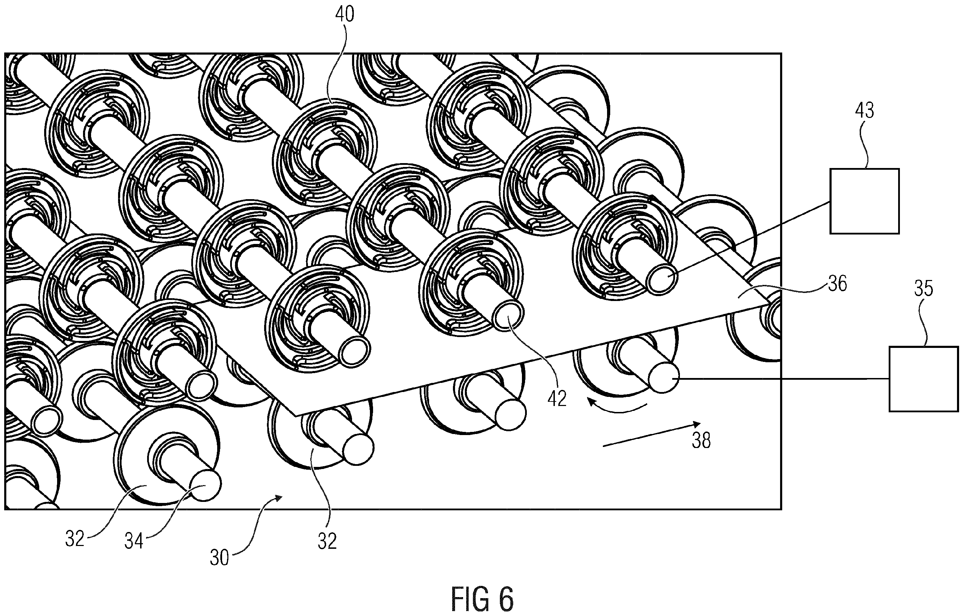

Fig. 6 zeigt eine schematische perspektivische Ansicht einer Transportvorrichtung 30, die eine Mehrzahl von Förderrollen 32 aufweist, die auf jeweiligen Wellen 34 gelagert sind. Zumindest einige der Wellen 34 können angetrieben sein, um einen Transport eines plattenförmigen Guts 36 entlang einer Förderrichtung 38 bewirken zu können. Ein entsprechender Antrieb ist in Fig. 6 schematisch als Block 35 dargestellt. Eine Mehrzahl von Niederhalterollen 40 ist vorgesehen, die das plattenförmige Gut 36 während des Transports gegen die Transportrollen 32 drücken. Bei dem gezeigten Ausführungsbeispiel entsprechen die Niederhalterollen 40 Federrollen, wie sie oben Bezug nehmend auf die Fig. 1 und 2 beschrieben wurden. Zu diesem Zweck sind bei dem gezeigten Beispiel jeweils mehrere Federrollen 40 auf einer jeweiligen Welle 42 gelagert. Alternativ kann auch nur eine Federrolle pro Achse vorgesehen sein.

Bei Ausführungsbeispielen kann ein Antrieb 43 für die Wellen 42 vorgesehen sein, der die Wellen 42 derart antreibt, dass sich die Federrollen synchron zur Bewegung des Guts 36 bewegen, um eine Relativbewegung zwischen dem Gut und den Federrollen zu vermeiden. Beispielsweise können zu diesem Zweck die Antriebe 35 und 43 durch einen gemeinsamen Motor gebildet sein, der die Wellen 34 und 42 über entsprechende Getriebe antreibt. Entsprechende Drehrichtungen sind in Fig. 6 durch Pfeile angezeigt.

Im Betrieb wird das plattenförmige Gut 36, bei dem es sich beispielsweise um einen Halbleiter-Wafer handeln kann, durch die Transportrollen 32 in Transportrichtung 38 befördert. Die Federrollen 40 sind in einem bestimmten Abstand zu den Transportrollen 32 angeordnet, um ein Passieren des plattenförmigen Guts 36 zwischen den Federrollen 40 und den Transportrollen 32 zu ermöglichen, wobei der Abstand so eingestellt werden kann, dass ein leichtes Klemmen des plattenförmigen Transportguts zwischen den Rollen stattfindet.

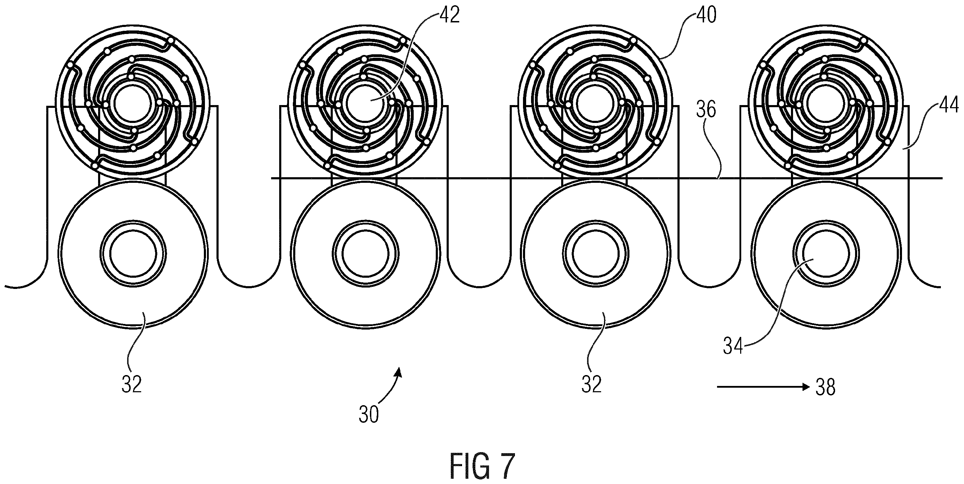

Eine schematische Seitenansicht der in Fig. 6 gezeigten Transportvorrichtung ist in Fig. 7 dargestellt, wobei in Fig. 7 jeweilige Lager für die Wellen 34 und 42, auf denen die jeweiligen Rollen angeordnet sind, schematisch mit dem Bezugszeichen 44 bezeichnet sind.

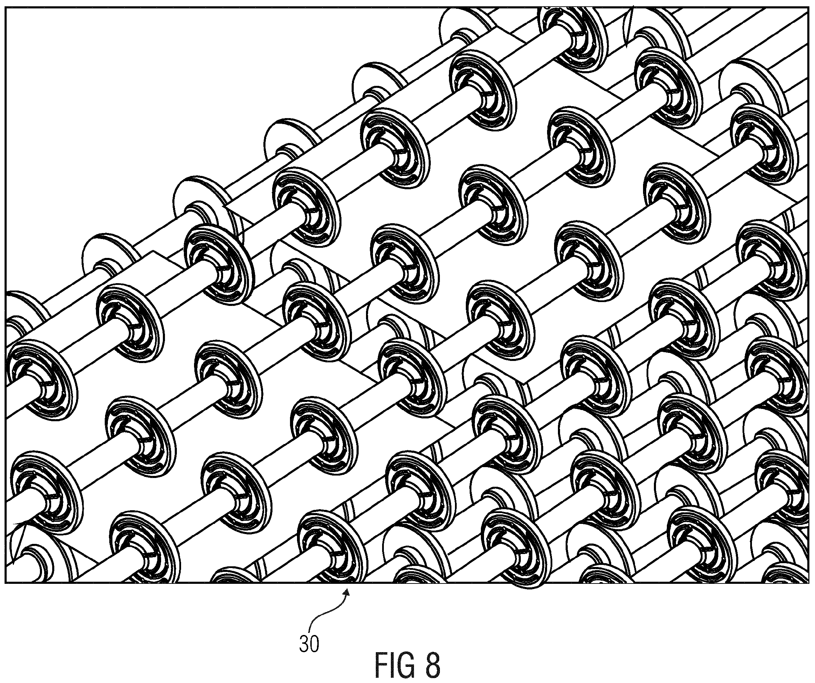

Eine weitere schematische perspektivische Ansicht einer solchen Transportvorrichtung ist in Fig. 8 dargestellt. Wie in Fig. 8 gezeigt ist, kann die Transportvorrichtung auch verwendet werden, um ein Transport anderer Dimensionen zu transportieren, beispielsweise ein breiteres Substrat, so dass eine größere Anzahl von Federrollen mit dem Transportgut Eingriff nehmen. Ferner kann der Abstand zwischen Transportrollen und Federrolle einstellbar sein, um den Transport von Transportgütern unterschiedlicher Dicke zu ermöglichen.

Die Fig. 6 bis 8 zeigen eine Transportvorrichtung, bei der eine Transporteinrichtung, gegen die das zu transportierende Gut mittels der Federrollen gedrückt wird, Transportrollen sind. Bei alternativen Ausführungsbeispielen kann die Transporteinrichtung durch andere Mittel implementiert sein, beispielsweise durch angetriebene Bänder, angetriebene Riemen oder angetriebene Ketten, auf denen das zu transportierende Gut aufliegt, oder die Auflagen für das zu transportierende Gut bewegen. Entsprechende Transporteinrichtungen sind Fachleuten bekannt und können insbesondere ausgebildet sein, um ein horizontal ausgerichtetes plattenförmiges Transportgut zu transportieren, wie Bezug nehmend auf die Fig. 6 bis 8 beschrieben wurde.

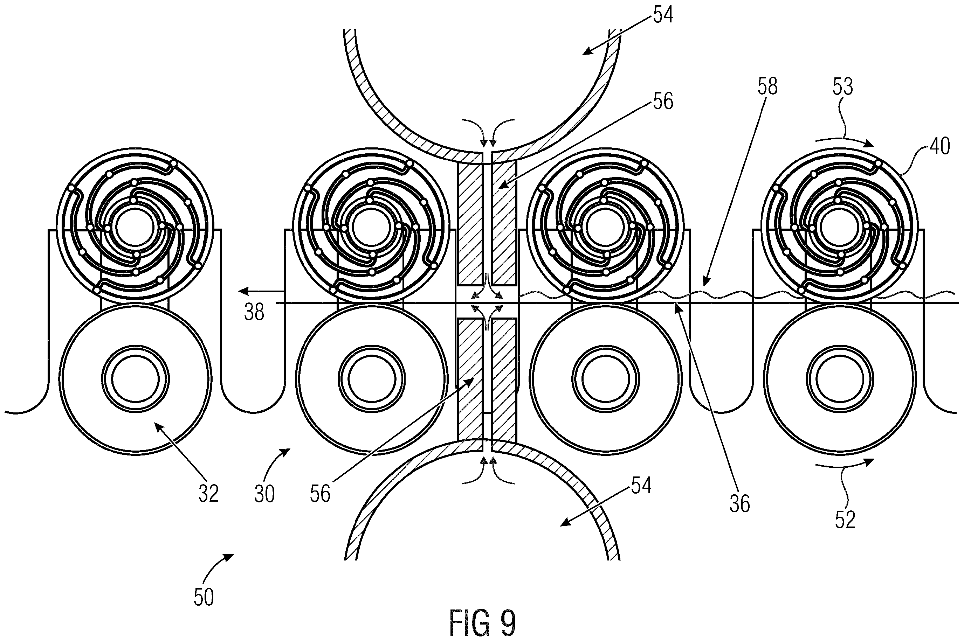

Eine entsprechende Transportvorrichtung kann beispielsweise Teil einer Vorrichtung zum Behandeln eines Guts sein, die ausgelegt ist, um das Gut durch eine oder mehrere Prozessstationen, in denen das Gut behandelt wird, zu transportieren. Beispiele solcher Behandlungsvorrichtungen werden nachfolgend Bezug nehmend auf die Fig. 9 bis 11 erläutert. Es sei darauf hingewiesen, dass die in den Fig. 9 bis 11 gezeigten Behandlungsvorrichtungen rein beispielhaft sind und die Erfindung nicht auf solche Behandlungsvorrichtungen begrenzt ist. Beispielsweise können gemäß anderen Ausführungsbeispielen Behandlungsvorrichtungen für Gasphasen-Prozesse ausgelegt sein. Bei Ausführungsbeispielen kann die Transportvorrichtung und/oder die Behandlungsvorrichtung ferner ausgelegt sein, um das Gut in vertikaler oder geneigter Position zu transportieren, wobei das Gut in der jeweiligen Lage, horizontal, vertikal oder geneigt, durch die Federrollen gegen die Transporteinrichtung, z.B. entsprechende Transportrollen, gehalten wird.

Fig. 9 zeigt eine Behandlungsvorrichtung 50, die eine Transportvorrichtung 30 aufweist und die zur beidseitigen Trocknung des Prozessguts 36, bei dem es sich beispielsweise um ein Halbleitersubstrat handeln kann, ausgelegt ist. Das Substrat 36 wird mittels der Transportrollen 32, die auch als Stützrollen bezeichnet werden können, entlang der Transportrichtung 38 transportiert, indem alle oder einige der Transportrollen 32 in der Richtung, die durch den Pfeil 52 angezeigt ist, angetrieben werden. Synchron dazu können die Federrollen 40 angetrieben werden, wie durch einen Pfeil 53 angezeigt ist.

Verteilerrohre 54 für komprimiertes Gas sind oberhalb und unterhalb einer Transportebene, in der das Substrat 36 transportiert wird, vorgesehen. An jeweiligen Auslässen der Verteilerrohre 54 sind Gasdüsen 56 vorgesehen, die ausgelegt sind, um eine auf die Oberseite und die Unterseite des Substrats 36 gerichtete Gasströmung zu erzeugen. Im Betrieb wird das Substrat 36 in Transportrichtung 38 befördert, wobei sich Flüssigkeit auf dem Substrat befinden kann, wie durch einen Pfeil 58 in Fig. 9 angedeutet ist. Durch die Gasdüsen 56 wird eine Gasströmung auf die Oberseite und die Unterseite des Substrats 36 bewirkt, so dass eine Trocknung des Substrats stattfindet. Bei der in Fig. 9 gezeigten Vorrichtung findet eine beidseitige Trocknung des Substrats statt. Bei alternativen Ausführungsbeispielen kann auch eine einseitige Trocknung des Substrats stattfinden, beispielsweise eine Trocknung nur der Oberseite des Substrats.

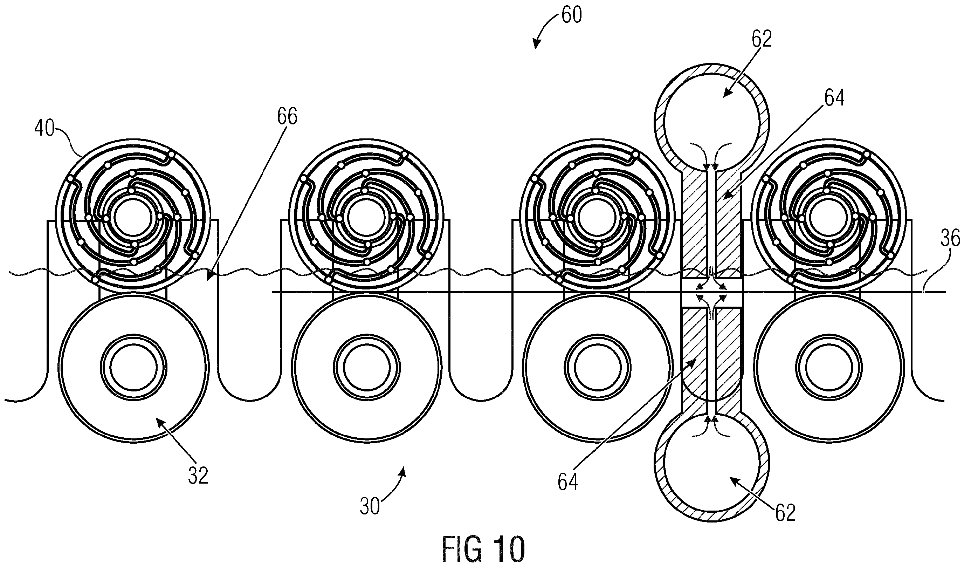

Fig. 10 zeigt eine Behandlungsvorrichtung 60, die für einen Tauchprozess ausgelegt ist. Die Vorrichtung 60 weist wiederum eine Transportvorrichtung 30 mit Transportrollen 32 und Federrollen 40 auf. Ein Verteilersystem 62 mit Ausströmköpfen 64 ist vorgesehen, das ausgelegt ist, um Prozessflüssigkeit zuzuführen, um einen Flüssigkeitsspiegel zu erzeugen, wie er durch ein Bezugszeichen 66 in Fig. 10 angedeutet ist. Beispielsweise kann das Verteilersystem 62 ausgebildet sein, um einen entsprechenden Flüssigkeitspegel 66 in einem Tauchbecken zu erzeugen. In jedem Fall wird bei dem gezeigten Ausführungsbeispiel das Substrat 36 durch die Transportvorrichtung 30 in die Flüssigkeit eingetaucht, so dass eine beidseitige Behandlung des Substrats 36 mit der Flüssigkeit stattfindet. Das Substrat 36 wird dabei durch die Federrollen 40 gegen die Transportrollen 42 gehalten, so dass ein Eintauchen des Substrats in die Flüssigkeit sichergestellt ist und ein Aufschwimmen verhindert werden kann. Bei alternativen Ausführungsbeispielen kann die Behandlungsvorrichtung 60 ausgelegt sein, um den Flüssigkeitsspiegel 66 so einzustellen, dass nur eine einseitige Behandlung des Substrats 36 mit der Prozessflüssigkeit stattfindet.

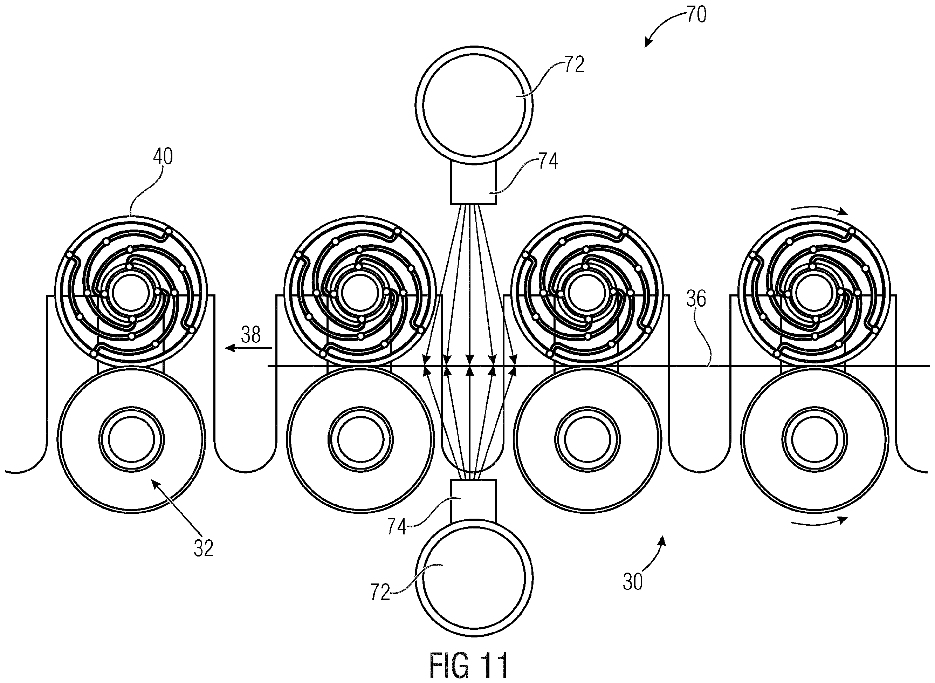

Fig. 11 zeigt ein Ausführungsbeispiel einer Behandlungsvorrichtung, die für einen Sprühprozess bzw. eine Reinigung eines Substrats ausgelegt ist. Wiederum ist eine entsprechende Transportvorrichtung 30 vorgesehen. In einem Behandlungsbereich der Behandlungsvorrichtung 70 sind Verteilerrohre 72 und Düsen 74 vorgesehen. Die Verteilerrohre dienen zum Verteilen einer Sprühflüssigkeit und die Düsen 74 sind ausgelegt, um die Sprühflüssigkeit auf die Oberseite und die Unterseite des Substrats 36 zu sprühen. Durch die Transportvorrichtung 30 wird das Substrat 36 durch den Behandlungsbereich bewegt, so dass Oberseite und Unterseite des Substrats 36 mit der Sprühflüssigkeit besprüht werden. Bei alternativen Ausführungsbeispielen kann eine entsprechende Sprüheinrichtung nur oberhalb bzw. unterhalb der Transportebene des Substrats 36 vorgesehen sein, so dass nur eine einseitige Behandlung des Substrats 36 stattfindet.

Bei alternativen Ausführungsbeispielen können die Düsen 74 durch eine Einrichtung ersetzt sein, die ausgebildet ist, um das Substrat zu fluten, beispielsweise indem ein Strahl einer Behandlungsflüssigkeit auf das Substrat gerichtet wird.

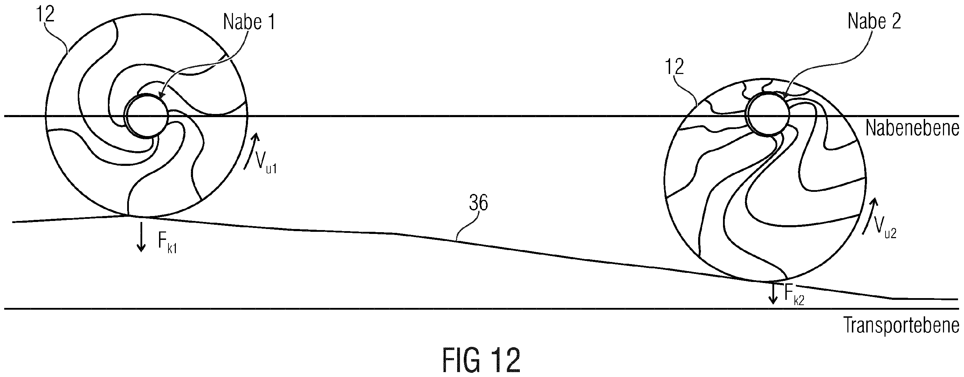

Fig. 12 zeigt schematisch eine Seitenansicht zweier Federrollen, von denen eine eine erste Nabe (Nabel) und eine eine zweite Nabe (Nabe2) aufweist. Die Naben Nabe1 und Nabe2 sind in einer Nabeneben angeordnet. die Position der Naben kann durch den mechanischen Aufbau einer Transportvorrichtung fixiert sein. Ferner ist in Fig. 12 schematisch eine Transportebene dargestellt, in der ein Gut transportiert wird. An der Unterseite des jeweiligen Abrollrings 12 sind die Federrollen in Kontakt mit dem zu transportierenden Gut. Die in Fig. 12 dargestellten unterschiedlichen Positionen der beiden Federrollen können beispielsweise durch eine unterschiedliche Dicke eines zu transportierenden Guts 36 bedingt sein, wie in Fig. 12 übertrieben dargestellt ist. Die Federrollen üben ein Kraft Fₖ₁ bzw. Fₖ₂ auf das zu transportierende Gut aus. Die Außenseite des jeweiligen Abrollrings 12 bewegt sich mit einer Geschwindigkeit vᵤ₁ bzw. vᵤ₂.

Durch den beschriebenen Aufbau der Federrolle wird eine flache Federkonstante der Federrolle erreicht, so dass unabhängig von der Position der Nabe relativ zu der Oberfläche des Guts 36, d.h. unabhängig vom Abstand der Nabe von der Oberfläche des Guts, eine gleichbleibende Federkonstante und somit eine gleiche Kraft (Fₖ₁ = Fₖ₂) und eine gleiche Umlaufgeschwindigkeit (vᵤ₁ = vᵤ₂) erreicht werden kann. Anders ausgedrückt ermöglicht der beschriebene Aufbau der Federrolle, dass die Position der Nabe relativ zu dem Abrollring über einen bestimmten Bereich, beispielsweise in einem zu dem Abrollring konzentrischen Kreis mit 20% des Durchmessers des Abrollrings, variieren kann, während die Federkonstante und die Umlaufgeschwindigkeit unabhängig von der Relativposition der Nabe in diesem Bereich gleich bleiben.

Ausführungsbeispiele der Erfindung ermöglichen somit, dass die Abrollgeschwindigkeit unabhängig von dem Niveau des Abrollringes bei unveränderter Höhe der Nabe über der Transportebene gleich bleibt.

Bei Ausführungsbeispielen der Erfindung ist die Transporteinrichtung aktiv angetrieben, um das Gut entlang des Transportwegs zu transportieren. Bei alternativen Ausführungsbeispielen, bei denen die Federrollen angetrieben sind, kann die Transporteinrichtung auch nicht angetrieben sein und ausgelegt sein, um passiv den Transport des Guts entlang des Transportwegs zu unterstützen. Bei solchen Ausführungsbeispielen kann die Transporteinrichtung eine nicht angetriebene Rolle, ein nicht angetriebenes Band, einen nicht angetriebenen Riemen oder eine nicht angetriebene Kette aufweisen.

Ausführungsbeispiele der vorliegenden Erfindung ermöglichen somit Transportvorrichtungen und Vorrichtungen zum Behandeln eines Guts, bei denen das Gut unter Verwendung von Federrollen, wie sie hierin beschrieben sind, niedergehalten wird. Bei Ausführungsbeispielen der Erfindung können entsprechende Niederhaltefederrollen im Einlaufbereich bzw. Auslaufbereich von Horizontaltauchprozessen für die Fixierung von dünnen Substraten eingesetzt werden, wie beispielsweise Bezug nehmend auf Fig. 10 beschrieben wurde.

Gemäß einem ersten Aspekt ist herein eine Federrolle mit folgenden Merkmalen offenbart: einer Nabe und einem Abrollring, der durch eine Mehrzahl von um den Umfang der Nabe verteilten Speichen federnd an der Nabe gelagert ist, wobei jede der Speichen folgende Merkmale aufweist: ein erstes Segment, das an der Nabe angebracht ist; ein zweites Segment, das an dem Abrollring angebracht ist; und ein drittes Segment zwischen dem ersten Segment und dem zweiten Segment, das bezüglich der radialen Richtung stärker geneigt ist als das erste und das zweite Segment. Gemäß einem zweiten Aspekt erstreckt sich bei einer Federrolle nach dem ersten Aspekt das dritte Segment in Umfangsrichtung der Federrolle mit zunehmendem Abstand zu der Nabe von dem ersten Segment zu dem zweiten Segment. Gemäß einem dritten Aspekt weisen bei einer Federrolle nach dem zweiten Aspekt die dritten Segmente der Speichen eine solche Länge auf, dass die dritten Segmente zumindest jeweils benachbarter Speichen in radialer Richtung überlappen. Gemäß einem vierten Aspekt weisen bei einer Federrolle nach dem dritten Aspekt die dritten Segmente eine solche Länge auf, dass die dritten Segmente von drei jeweils benachbarten Speichen in radialer Richtung überlappen. Gemäß einem fünften Aspekt weist bei einer Federrolle nach einem der ersten bis vierten Aspekte das dritte Segment einen bogenförmigen Verlauf auf. Gemäß einem sechsten Aspekt weist bei einer Federrolle nach einem des ersten bis vierten Aspekts das dritte Segment zumindest einen geraden Abschnitt auf. Gemäß einem siebten Aspekt ist bei einer Federrolle nach dem sechsten Aspekt zwischen dem geraden Abschnitt des dritten Segments und dem ersten und zweiten Abschnitt jeweils zumindest ein bogenförmiges Segment angeordnet. Gemäß einem achten Aspekt ist bei einer Federrolle nach dem sechsten oder siebten Aspekt der gerade Abschnitt des dritten Segments relativ zu der radialen Richtung um mehr als 45° oder mehr als 60° geneigt. Gemäß einem neunten Aspekt liegt bei einer Federrolle nach dem achten Aspekt die Neigung des geraden Abschnitts des dritten Segments (24c) zu der radialen Richtung in einem Bereich von 85° bis 90°. Gemäß einem zehnten Aspekt kann bei einer Federrolle nach einem der ersten bis neunten Aspekte die Position der Nabe relativ zu dem Abrollring über einen bestimmten Bereich variieren, während die Federkonstante und die Umlaufgeschwindigkeit unabhängig von der Position der Nabe in diesem Bereich gleich bleiben. Gemäß einem elften Aspekt weist eine Transportvorrichtung eine Transporteinrichtung, die ausgelegt ist, um den Transport eines zu transportierenden Guts entlang eines Transportwegs zu unterstützen, und zumindest eine Federrolle nach einem des ersten bis zehnten Aspekt auf, um das zu transportierende Gut gegen die Transporteinrichtung zu halten. Gemäß einem zwölften Aspekt weist die Transportvorrichtung nach dem elften Aspekt eine Antriebseinrichtung auf, die ausgelegt ist, um die zumindest eine Federrolle anzutreiben, um sich synchron zur Bewegung des zu transportierenden Guts zu bewegen. Gemäß einem dreizehnten Aspekt weist bei der Transportvorrichtung nach dem zwölften Aspekt die Transporteinrichtung eine angetriebene Rolle, ein angetriebenes Band, einen angetriebenen Riemen oder eine angetriebene Kette auf. Gemäß einem viertzehnten Aspekt ist die Transportvorrichtung nach einem des elften bis dreizehnten Aspekts ausgelegt, um ein horizontal ausgerichtetes plattenförmiges Transportgut zu transportieren. Gemäß einem fünfzehnten Aspekt weist eine Vorrichtung zum Behandeln eines Guts eine Prozessstation und eine Transportvorrichtung nach einem der elften bis vierzehnten Aspekte auf, die ausgelegt ist, um das Gut durch die Prozessstation, in der das Gut behandelt wird, zu transportieren. Gemäß einem sechzehnten Aspekt weist bei der Vorrichtung nach dem fünfzehnten Aspekt die Prozessstation eine Trocknungsstation, ein Tauchstation, eine Sprühstation und/oder eine Flutstation auf. Gemäß einem siebzehnten Aspekt weist ein Verfahren zum Transportieren eines zu transportierenden Guts ein Transportieren eines zu transportierendes Guts entlang eines Transportwegs und ein Halten des zu transportierenden Guts gegen eine Transporteinrichtung mittels zumindest einer Federrolle gemäß einem des ersten bis zehnten Aspekts auf. Gemäß einem achtzehnten Aspekt weist das nach dem siebzehnten Aspekt ein Antreiben der zumindest einer Federrolle auf, um sich synchron zu der Bewegung des zu transportierenden Guts zu bewegen.

## Patentansprüche

1. Verfahren zum Transportieren eines zu transportierenden Guts (36) in horizontaler Ausrichtung entlang eines Transportwegs unter Verwendung einer Transportvorrichtung (30), wobei das zu transportierende Gut (36) ein Halbleiterwafer, eine Glasplatte oder eine Polymerplatte ist und die Transportvorrichtung (30) folgende Merkmale aufweist:
eine Transporteinrichtung (32), die ausgelegt ist, um den Transport des zu transportierenden Guts (36) entlang eines Transportwegs zu unterstützen, **gekennzeichnet durch**, zumindest eine Federrolle (40), um das zu transportierende Gut (36) gegen die Transporteinrichtung zu halten, wobei die Federrolle eine Nabe (10) und einen Abrollring (12), der durch eine Mehrzahl von um den Umfang der Nabe verteilten Speichen (14, 34) federnd an der Nabe (10) gelagert ist, aufweist, wobei jede der Speichen (14, 34) ein erstes Segment (14a, 34a), das an der Nabe (10) angebracht ist, ein zweites Segment (14b, 34b), das an dem Abrollring (12) angebracht ist, und ein drittes Segment (14c, 34c) zwischen dem ersten Segment (14a, 34a) und dem zweiten Segment (14b, 34b) aufweist, das bezüglich der radialen Richtung relativ zum Mittelpunkt der Nabe stärker geneigt ist als das erste und zweite Segment, wobei das dritte Segment (14c, 34c) in Umfangsrichtung der Federrolle mit zunehmendem Abstand zu der Nabe (10) von dem ersten Segment (14a, 34a) zu dem zweiten Segment (14b, 34b) erstreckt und einen bogenförmigen Verlauf aufweist,
wobei das erste Segment (14a, 34a) gekrümmt ist, wobei eine Krümmungsrichtung des ersten Segments (14a, 34a) einer Krümmungsrichtung des dritten Segments (14c, 34c) entspricht,
wobei zwischen dem zweiten Segment (14, 34b) und dem dritten Segment (14c, 34c) ein weiteres bogenförmiges Segment (14d) angeordnet ist, dessen Krümmungsrichtung sich von der Krümmungsrichtung des dritten Segments (14c, 34c) unterscheidet und dessen Krümmungsradius geringer ist als der Krümmungsradius des dritten Segments (14c, 34c),
wobei das Verfahren folgendes Merkmal aufweist: Halten des zu transportierenden Guts gegen die Transporteinrichtung mittels der zumindest einen Federrolle.

2. Verfahren zum Transportieren eines zu transportierenden Guts (36) in horizontaler Ausrichtung entlang eines Transportwegs unter Verwendung einer Transportvorrichtung (30), wobei das zu transportierende Gut (36) ein Halbleiterwafer, eine Glasplatte oder eine Polymerplatte ist und die Transportvorrichtung (30) folgende Merkmale aufweist:
eine Transporteinrichtung (32), die ausgelegt ist, um den Transport des zu transportierenden Guts (36) entlang eines Transportwegs zu unterstützen, **gekennzeichnet durch**, zumindest eine Federrolle (40), um das zu transportierende Gut (36) gegen die Transporteinrichtung zu halten, wobei die Federrolle eine Nabe (10) und einen Abrollring (12), der durch eine Mehrzahl von um den Umfang der Nabe verteilten Speichen (24) federnd an der Nabe (10) gelagert ist, aufweist, wobei jede der Speichen (24) ein erstes Segment (24a), das an der Nabe (10) angebracht ist, ein zweites Segment (24b), das an dem Abrollring (12) angebracht ist, und ein drittes Segment (24c) zwischen dem ersten Segment (24a) und dem zweiten Segment (24b) aufweist, das bezüglich der radialen Richtung relativ zum Mittelpunkt der Nabe stärker geneigt ist als das erste und zweite Segment, wobei das dritte Segment (24c) ein gerader Abschnitt ist,
wobei das erste Segment (24a) bogenförmig ist, wobei das erste Segment durch ein bogenförmiges viertes Segment (24d) mit einem ersten Ende des dritten Segments (24c) verbunden ist, wobei die Krümmungsrichtung des vierten Segments (24d) entgegengesetzt zur Krümmungsrichtung des ersten Segments (24a) ist, und
wobei das zweite Segment (24b) bogenförmig ist, wobei das zweite Segment (24b) durch ein bogenförmiges fünftes Segment (24e) mit einem zweiten Ende des dritten Segments (24c) verbunden ist, wobei die Krümmungsrichtung des fünften Segments (24e) sich von der Krümmungsrichtung des zweiten Segments unterscheidet,
wobei das Verfahren folgendes Merkmal aufweist: Halten des zu transportierenden Guts gegen die Transporteinrichtung mittels der zumindest einen Federrolle.

3. Verfahren nach Anspruch 1 oder 2, bei dem die Transportvorrichtung eine Antriebseinrichtung aufweist, die ausgelegt ist, um die zumindest eine Federrolle (40) anzutreiben, um sich synchron zur Bewegung des zu transportierenden Guts zu bewegen.

4. Verfahren nach Anspruch 3, bei dem die Transporteinrichtung eine angetriebene Rolle, ein angetriebenes Band, einen angetriebenen Riemen oder eine angetriebene Kette aufweist.

5. Verfahren nach Anspruch 1, bei dem die dritten Segmente (14c) der Speichen eine solche Länge aufweisen, dass die dritten Segmente zumindest jeweils benachbarter Speichen in radialer Richtung überlappen.

6. Verfahren nach Anspruch 5, bei dem die dritten Segmente (14c) eine solche Länge aufweisen, dass die dritten Segmente von drei jeweils benachbarten Speichen in radialer Richtung überlappen.

7. Verfahren nach Anspruch 2, bei dem der gerade Abschnitt des dritten Segments (24c) relativ zu der radialen Richtung um mehr als 45° oder mehr als 60° geneigt ist.

8. Verfahren nach Anspruch 7, bei dem die Neigung des geraden Abschnitts des dritten Segments (24c) zu der radialen Richtung in einem Bereich von 85° bis 90° liegt.

9. Verfahren zum Transportieren eines zu transportierenden Guts nach einem der Ansprüche 1 bis 8, mit folgendem Merkmal:
Antreiben der zumindest einer Federrolle, um sich synchron zu der Bewegung des zu transportierenden Guts zu bewegen.

10. Verfahren zum Transportieren eines zu transportierenden Guts nach einem der Ansprüche 1 bis 9, wobei das Gut durch eine Prozessstation, in der das Gut behandelt wird, transportiert wird, wobei die Prozessstation eine Trocknungsstation, ein Tauchstation, eine Sprühstation, und/oder eine Flutstation aufweist.

## Claims

1. A method for transporting an item to be transported (36) in a horizontal orientation along a transport path using a transport apparatus (30), wherein the item to be transported (36) is a semiconductor wafer, a glass plate or a polymer plate, and the transport apparatus (30) comprises:
transport means (32) configured to support the transport of the item to be transported (36) along a transport path, **characterized by**
at least one spring roller (40) for holding the item to be transported (36) against the transport means, the spring roller comprising a hub (10) and a roller ring (12) spring-mounted on the hub (10) by a plurality of spokes (14, 34) distributed around the periphery of the hub, each of the spokes (14, 34) comprising a first segment (14a, 34a) attached to the hub (10), a second segment (14b, 34b) attached to the roller ring (12), and a third segment (14c, 34c) between the first segment (14a, 34a) and the second segment (14b, 34b), which is more heavily inclined relative to the center of the hub with respect to the radial direction than the first and second segments,
wherein the third segment (14c, 34c) extends from the first segment (14a, 34a) to the second segment (14b, 34b) in a peripheral direction of the spring roller with increasing distance to the hub (10) and comprises an arc-shaped course,
wherein the first segment (14a, 34a) is curved, wherein a direction of curvature of the first segment (14a, 34a) corresponds to a direction of curvature of the third segment (14c, 34c),
wherein a further arc-shaped segment (14d) is disposed between the second segment (14b, 34b) and the third segment (14c, 34c), whose direction of curvature differs from the direction of curvature of the third segment (14c, 34c) and whose radius of curvature is lower than the radius of curvature of the third segment (14c, 34c),
the method comprising:
holding the item to be transported against the transport means by means of the at least one spring roller.

2. A method for transporting an item to be transported (36) in a horizontal orientation along a transport path using a transport apparatus (30), wherein the item to be transported (36) is a semiconductor wafer, a glass plate or a polymer plate, and the transport apparatus (30) comprises:
transport means (32) configured to support the transport of the item to be transported (36) along a transport path, **characterized by**
at least one spring roller (40) for holding the item to be transported (36) against the transport means, the spring roller comprising a hub (10) and a roller ring (12) spring-mounted on the hub (10) by a plurality of spokes (24) distributed around the periphery of the hub, each of the spokes (24) comprising a first segment (24a) attached to the hub (10), a second segment (24b) attached to the roller ring (12), and a third segment (24c) between the first segment (24a) and the second segment (24b), which is more heavily inclined relative to the center of the hub with respect to the radial direction than the first and second segments,
wherein the third segment (24c) is a straight portion,
wherein the first segment (24a) is arc-shaped, wherein the first segment is connected to a first end of the third segment (24c) by an arc-shaped fourth segment (24d), wherein the direction of curvature of the fourth segment (24d) is opposite to the direction of curvature of the first segment (24a), and
wherein the second segment (24b) is arc-shaped, wherein the second segment (24b) is connected to a second end of the third segment (24c) by an arc-shaped fifth segment (24e), wherein the direction of curvature of the fifth segment (24e) differs from the direction of curvature of the second segment,
the method comprising:
holding the item to be transported against the transport means by means of the at least one spring roller,

3. The method according to claim 1 or 2, wherein the transport apparatus comprises a drive means configured to drive the at least one spring roller (40) so that the same moves synchronously with the movement of the item to be transported.

4. The method according to claim 3, wherein the transport means comprises a driven roller, a driven band, a driven belt or a driven chain.

5. The method according to claim 1, wherein the third segments (14c) of the spokes have such a length that the third segments, at least of respectively adjacent spokes, overlap in the radial direction.

6. The method according to claim 5, wherein the third segments (14c) have such a length that the third segments of three respectively adjacent spokes overlap in the radial direction.

7. The method according to claim 2, wherein the straight portion of the third segment (24c) is inclined by more than 45° or more than 60° with respect to the radial direction.

8. The method according to claim 7, wherein the inclination of the straight portion of the third segment (24c) with respect to the radial direction is in a range of 85° to 90°.

9. The method for transporting an item to be transported according to one of claims 1 to 8, comprising:
driving the at least one spring roller so that the same moves synchronously with the movement of the item to be transported.

10. The method for transporting an item to be transported according to one of claims 1 to 9, wherein the item is transported through a process station where the item is treated, wherein the process station comprises a drying station, a dipping station, a spraying station and/or flooding station.

## Revendications

1. Procédé de transport d'un produit à transporter (36) selon une orientation horizontale le long d'un trajet de transport à l'aide d'un dispositif de transport (30), dans lequel le produit à transporter (36) est une plaquette semi-conductrice, une plaque de verre ou une plaque de polymère et le dispositif de transport (30) présente les caractéristiques suivantes:
un moyen de transport (32) qui est conçu pour supporter le transport du produit à transporter (36) le long d'un trajet de transport,
**caractérisé par**
au moins une roulette à ressorts (40) destinée à maintenir le produit à transporter (36) contre le moyen de transport, où la roulette à ressorts présente un moyeu (10) et une bague de roulement (12) qui est montée de manière élastique par une pluralité de rayons (14, 34) répartis autour du pourtour du moyeu (10), où chacun des rayons (14, 34) présente un premier segment (14a, 34a) qui est placé sur le moyeu (10), un deuxième segment (14b, 34b) qui est placé sur la bague de roulement (12) et un troisième segment (14c, 34c) entre le premier segment (14a, 34a) et le deuxième segment (14b, 34b), qui est plus incliné par rapport à la direction radiale par rapport au centre du moyeu que le premier et le deuxième segment,
dans lequel le troisième segment (14c, 34c) s'étend, dans la direction circonférentielle de la roulette à ressorts, à une distance croissante du moyeu (10), du premier segment (14a, 34a) vers le deuxième segment (14b, 34b) et présente un tracé en forme d'arc,
dans lequel le premier segment (14a, 34a) est courbé, où une direction de courbure du premier segment (14a, 34a) correspond à une direction de courbure du troisième segment (14c, 34c), dans lequel est disposé, entre le deuxième segment (14, 34b) et le troisième segment (14c, 34c), un autre segment en forme d'arc (14d) dont la direction de courbure est différente de la direction de courbure du troisième segment (14c, 34c) et dont le rayon de courbure est plus petit que le rayon de courbure du troisième segment (14c, 34c),
dans lequel le procédé présente la caractéristique suivante consistant à:
maintenir le produit à transporter contre le moyen de transport au moyen de l'au moins une roulette à ressorts.

2. Procédé de transport d'un produit à transporter (36) selon une orientation horizontale le long d'un trajet de transport à l'aide d'un moyen de transport (30), dans lequel le produit à transporter (36) est une plaquette semi-conductrice, une plaque de verre ou une plaque de polymère et le dispositif de transport (30) présente les caractéristiques suivantes:
un moyen de transport (32) qui est conçu pour supporter le transport du produit à transporter (36) le long d'un trajet de transport,
**caractérisé par**
au moins un roulette à ressorts (40) destiné à maintenir le produit à transporter (36) contre le moyen de transport, où la roulette à ressorts présente un moyeu (10) et une bague de roulement (12) qui est montée de manière élastique par une pluralité de rayons (24) répartis autour du pourtour du moyeu (10), où chacun des rayons (24) présente un premier segment (24a) qui est placé sur le moyeu (10), un deuxième segment (24b) qui est placé sur la bague de roulement (12) et un troisième segment (24c) entre le premier segment (24a) et le deuxième segment (24b), qui est plus incliné par rapport à la direction radiale par rapport au centre du moyeu que le premier et le deuxième segment,
dans lequel le troisième segment (24c) est un segment droit,
dans lequel le premier segment (24a) est en forme d'arc, dans lequel le premier segment est relié par un quatrième segment en forme d'arc (24d) à une première extrémité du troisième segment (24c), dans lequel la direction de courbure du quatrième segment (24d) est opposée à la direction de courbure du premier segment (24a), et
dans lequel le deuxième segment (24b) est en forme d'arc, dans lequel le deuxième segment (24b) est relié par un cinquième segment en forme d'arc (24e) à une deuxième extrémité du troisième segment (24c), dans lequel la direction de courbure du cinquième segment (24e) est différente de la direction de courbure du deuxième segment,
dans lequel le procédé présente la caractéristique suivante consistant à:
maintenir le produit à transporter contre le moyen de transport au moyen d'au moins une roulette à ressorts.

3. Procédé selon la revendication 1 ou 2, dans lequel le dispositif de transport présente un moyen d'entraînement qui est conçu pour entraîner l'au moins une roulette à ressorts (40) de manière à se déplacer de manière synchrone avec le déplacement du produit à transporter.

4. Procédé selon la revendication 3, dans lequel le moyen de transport présente un rouleau entraîné, une bande entraînée, une courroie entraînée ou une chaîne entraînée.

5. Procédé selon la revendication 1, dans lequel les troisièmes segments (14c) des rayons présentent une longueur telle que les troisièmes segments viennent, chacun, en recouvrement avec des rayons adjacents dans la direction radiale.

6. Procédé selon la revendication 5, dans lequel les troisièmes segments (14c) présentent une longueur telle que les troisièmes segments de trois rayons chaque fois adjacents viennent en recouvrement dans la direction radiale.

7. Procédé selon la revendication 2, dans lequel le segment droit du troisième segment (24c) est incliné de plus de 45° ou de plus de 60° par rapport à la direction radiale.

8. Procédé selon la revendication 7, dans lequel l'inclinaison du segment droit du troisième segment (24c) est de l'ordre de 85° à 90° par rapport à la direction radiale.

9. Procédé de transport d'un produit à transporter selon l'une des revendications 1 à 8, à la caractéristique suivante consistant à:
entraîner l'au moins une roulette à ressorts de manière à se déplacer de manière synchrone avec le déplacement du produit à transporter.

10. Procédé de transport d'un produit à transporter selon l'une des revendications 1 à 9, dans lequel le produit est transporté à travers un poste de traitement dans lequel le produit est traité, dans lequel le poste de traitement présente un poste de séchage, un poste d'immersion, un poste de pulvérisation et/ou un poste de remplissage.
